# EUROPÄISCHE PATENTSCHRIFT

(11) **EP 3 379 129 B1**
(45) Veröffentlichungstag und Bekanntmachung des Hinweises auf die Patenterteilung: **28.09.2022**
(21) Anmeldenummer: 17162486.9
(22) Anmeldetag: 23.03.2017
(51) Int. Cl.: F16L 37/12, F16L 37/133, F16L 37/138, F16L 37/098

(54) **ANSCHLUSSVERBINDER**
CONNECTOR
RACCORD

(43) Veröffentlichungstag der Anmeldung: 26.09.2018
(73) Patentinhaber: Georg Fischer JRG AG, 4450 Sissach (CH)
(72) Erfinder: Bürli, Stephan, 4402 Frenkendorf (CH); Knörnschild, Thomas, 4153 Reinach (CH)
(74) Vertreter: Fenner, Seraina

(56) Entgegenhaltungen:
- AU-A- 1 478 176
- DE-C1- 4 107 603
- US-A1- 2008 036 206

## Beschreibung

Die Erfindung betrifft einen lösbaren Anschlussverbinder zum Anschliessen an eine Stützhülse vorzugsweise eines Klemmfittings für Rohre, vorzugsweise aus Kunststoff, wobei der Anschlussverbinder dem Anschliessen eines Funktionselements an eine Stützhülse vorzugsweise eines Klemmfittings für Rohre dient, beinhaltend eine Innenhülse, wobei die Innenhülse einen Standardbereich zum Anschliessen an eine Stützhülse vorzugsweise eines Klemmfittings und ein Funktionselement zur Definition der weiteren Verwendung aufweist, wobei die Innenhülse einteilig ausgebildet ist, eine Schiebehülse zur Klemmung und Öffnung der Klemmung der Innenhülse an einer Stützhülse vorzugsweise eines Klemmfittings.

Solche Anschlussverbinder dienen dem modularen Aufbau von Rohrverbindungen, wobei der erfindungsgemässe Anschlussverbinder nicht direkt dem Anschliessen des Rohres dient, sondern vielmehr der Möglichkeit von einem modulartigen Aufbau einer Rohrverbindung mit individuellen Anschlussmöglichkeiten bzw. mit anderen Anschlusselementen. In vielen Fällen werden solche Anschlusselemente an das entsprechende Aufnahmeelement wie bspw. einen Verteiler geschraubt, wobei bei Kunststoffgewinden ein zusätzlich dichtendes Element wie bspw. ein O-Ring mit eingebaut wird, da das Kunststoffgewinde selbst nicht dichtend ist bzw. zur Dichtung nicht ausreicht. Jedoch um die Trinkwasserzulassung zu erreichen ist eine Systemanbindung der Anschlusselemente gemäss DVGW W 534 (Deutscher Verein des Gas- und Wasserfachs) gefordert, die ein dichtendes Anschlussgewinde aufweist, welches die Voraussetzungen der DIN-Norm EN 10226-1 erfüllt, welche eine Anbindung an das Trinkwassersystem mittels eines dichtenden Kunststoffgewindes nicht zulässt, weshalb in der Regel Übergangsstücke aus Kunststoff und einem metallischen Anschlussteil mit einem Gewinde vorzusehen sind, wenn nicht das komplette Teil einteilig aus Kunststoff hergestellt ist.

Wenn denn alternativ solche Verbindungsteile einteilig aus Kunststoff durch das Spritzgussverfahren hergestellt werden, sind die Investitionskosten für die Verbindungsteile sehr hoch, da jedes der Teile ein eigenes Spritzgusswerkezug benötigt, welches meist noch mehrere Formen zur Erhöhung der Wirtschaftlichkeit des Herstellprozesses beinhaltet und dies dann noch für unterschiedliche Dimensionen.

Somit ist es von Vorteil, wenn ein Basisteil gespritzt werden kann, das sich an bestehende Anschlüsse koppeln lässt und an das weitere Elemente wie Reduzierstücke, Abschlüsse usw. verbunden werden können, dadurch reduziert sich die Teilevielfallt ohne eine Einschränkung der Vielfalt der Funktionen und Dimensionen. Zudem kann eine solche Verbindung einfach gelöst und mit anderen Verbindungsteilen wieder verbunden werden.

Die US 4 451 069 offenbart eine Schnellkupplung, welche ein Einsteckteil und eine Hülse aufweist, wobei am Einsteckteil eine Schiebehülse angeordnet ist, welche dann über die Hülse, die auf das Einsteckteil geschoben ist, geschoben wird und dadurch zusammengeklemmt wird.

Nachteilig hierbei ist, dass das Einsteckteil eine lange Bauform aufweisen muss, da die Schiebehülse vor der Festklemmung auf dem Einsteckteil angeordnet ist.

Andere relevante Anschlussverbinder mit Stützhülse des Stands der Technik sind aus den Dokumenten DE4107603C1, US 2008/036206A1 und AU 1478176 A bekannt.

Es ist Aufgabe der Erfindung einen Anschlussverbinder vorzuschlagen, der eine einfache, schnelle und vielfältige Verbindung mit einer Stützhülse vorzugsweise eines Klemmfittings ermöglicht und die geforderten Bedingungen erfüllt.

**Diese Aufgabe wird erfindungsgemäss** durch den lösbaren Anschlussverbinder mit einer Stützhülse gemäss Anspruch 1 gelöst.

Der erfindungsgemässe Anschlussverbinder zum Anschliessen an eine Stützhülse vorzugsweise eines Klemmfittings für Rohre, ist vorzugsweise aus Kunststoff hergestellt. Der Anschlussverbinder dient dem Anschliessen eines Funktionselements, das heisst, dem Anschliessen eines Elements das eine bestimmte Funktion erfüllt, wie bspw. eine Abschlusskappe oder ein Reduzierstück, wie auch weitere Funktionselemente denkbar sind. Durch diesen modulartigen Aufbau kann jede gewünschte Verbindung erzeugt werden. Der Anschlussverbinder beinhaltend eine Innenhülse, wobei die Innenhülse einen Standardbereich zum Anschliessen an eine Stützhülse, vorzugsweise eines Klemmfittings und ein Funktionselement zur Definition der weiteren Verwendung aufweist. Die Innenhülse ist einteilig ausgebildet ist, das heisst, sie ist vorzugsweise als ein Spritzgussteil ausgebildet. Die Anschlussverbindung beinhaltet des Weiteren eine Schiebehülse zur Klemmung und Öffnung der Klemmung der Innenhülse an einer Stützhülse, vorzugsweise eines Klemmfittings. Die Schiebehülse der Anschlussverbindung ist am Aussenumfang der Innenhülse im Standardbereich angeordnet, wobei die Schiebehülse axial verschiebbar zur Klemmung und Öffnung der Klemmung der Innenhülse auf einer Stützhülse, angeordnet ist. Dadurch, dass die Schiebehülse direkt auf dem Aussendurchmesser der Innenhülse im Standardbereich angeordnet ist, kann eine kompakte Baulänge des Anschlussverbinders erzielt werden. Der Standardbereich der Innenhülse weist immer dieselbe Form auf wohingegen das anschliessende Funktionselement immer entsprechend der gewünschten Funktion zu wählen ist. Das heisst, eine solche Innenhülse kann auf der einen Seite z. B. als Standardbereich zum Anschliessen an eine Stützhülse und auf der andern Seite als Abdeckkappe, welche das Ende einer Rohrleitung bilden würde, ausgebildet sein. Denkbar ist auch, dass das Funktionselement als Stützhülse ausgebildet ist bspw. mit einer geringen Baugrösse, somit würde es als Reduzierstück eingesetzt werden können. Auch ein weiterer Standardbereich als Funktionselement ist ebenso denkbar. Vorteilhaft ist es, wenn der Standardbereich und das Funktionselement axial aneinander anschliessen, wobei erfindungsgemäss der Standardbereich an der vom Funktionselement abgewandten Seite Rastfinger aufweist. Die Rastfinger sind am Umfang des Standardbereichs regelmässig angeordnet, wobei sie eine Art Kranz bilden. Vorzugsweise weist die Innenhülse am Standardbereich vier bis 20 Rastfinger auf, wobei besonders bevorzugt acht bis 16 Rastfinger am Umfang angeordnet sind. Vorzugsweise werden die Rastfinger zur Montage des Anschlussverbinders über einen an einer Stützhülse angeordneten Flansch geschoben, was bedingt, dass die Rastfinger radial elastisch ausgebildet sind. Zudem ist es Vorteilhaft wenn die Rastfinger an ihrem Innendurchmesser eine ringsum verlaufende Nut aufweisen, wodurch die Innenhülse bei der Montage genau auf einer Stützhülse positioniert werden kann. Durch die Elastizität der Rastfinger werden die Rastfinger mittels Schiebehülse auf die Stützhülse gepresst und damit festgeklemmt.

Gemäss einer bevorzugten Ausführungsform weist die Innenhülse mindestens einen Rasthaken auf. Der Rasthaken vermeidet das unerwünschte Verschieben der Schiebehülse. Befindet sich die Schiebehülse im hinteren Bereich des Standardbereichs also nahe zum Funktionselement, sind die Rastfinger im vorderen Bereich nicht von der Schiebehülse umgeben und lassen sich dadurch auf die Stützhülse bzw. auf deren Flansch aufschieben, da ihre radiale Elastizität nicht unterbunden wird. Der Rasthaken ist dann in der einen Öffnung, vorzugsweise in der Öffnung welche sich näher an den Rastfingern befindet, an der Schiebehülse eingerastet, wobei diese Arretierung leicht lösbar ist da sie nur der Montage dient. Befinden sich die Rastfinger dann am Flansch der Stützhülse bzw. ist der Anschlussverbinder bzw. die Innenhülse am Flansch der Stützhülse aufgeklipst, kann die Schiebehülse zur Klemmung und Befestigung der Anschlussverbindung verschoben werden. Die Schiebehülse wird dann komplett über die Rastfinger geschoben und der Rasthaken wird während der Verschiebung der Schiebehülse elastisch nach unten gedrückt und springt dann in die nachfolgende Öffnung und verrastet die Schiebehülse wodurch die Anschlussverbindung auf der Stützhülse festgeklemmt ist. Die Schiebehülse kann mittels Spezialwerkzeug, welches den Rasthaken herunterdrückt, wieder gelöst werden.

Es ist vorteilhaft, wenn die Anschlussverbindung mindestens zwei Rasthaken aufweist. Vorzugsweise sind die Rasthaken im Standardbereich angeordnet und liegen sich am Aussenumfang der Innenhülse gegenüber.

Eine weitere bevorzugte Ausgestaltung der Erfindung besteht darin, dass die Innenhülse am Ende des Standardbereichs bzw. zwischen dem Funktionselement und dem Standardbereich eine Abschlussscheibe aufweist, wodurch ein verlieren der Schiebehülse vermieden wird. Da die Rastfinger elastisch sind, ist die Montage der Schiebehülse von vorne möglich, indem die Rastfinger radial zusammen gedrückt werden

Wie bereits zuvor erwähnt, weist die Schiebehülse zwei axial hintereinander angeordnete Öffnungen auf in denen sich der Rasthaken entsprechend der Position der Schiebehülse einhakt. Vorzugsweise weist die Schiebehülse an der gegenüberliegenden Seite ebenfalls zwei axial hintereinander angeordnete Öffnungen auf.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Halbschnitt eines erfindungsgemässen Anschlussverbinders vor der Montage an einer Stützhülse,
- Fig. 2: einen Halbschnitt eines erfindungsgemässen Anschlussverbinders bereits auf eine Stützhülse aufgeschoben,
- Fig. 3: einen Halbschnitt eines erfindungsgemässen Anschlussverbinders auf einer Stützhülse montiert und festgeklemmt,
- Fig. 4: einen Halbschnitt eines erfindungsgemässen Anschlussverbinders auf einer Stützhülse montiert, bereit zur Demontage mit einem Demontagewerkzeug,
- Fig. 5: eine dreidimensionale Ansicht eines erfindungsgemässen Anschlussverbinders mit dem Funktionselement einer Abschlusskappe,
- Fig. 6: eine dreidimensionale Ansicht eines erfindungsgemässen Anschlussverbinders mit dem Funktionselement eines Standardbereichs und
- Fig. 7: eine dreidimensionale Ansicht eines erfindungsgemässen Anschlussverbinders mit dem Funktionselement einer reduzierten Stützhülse.

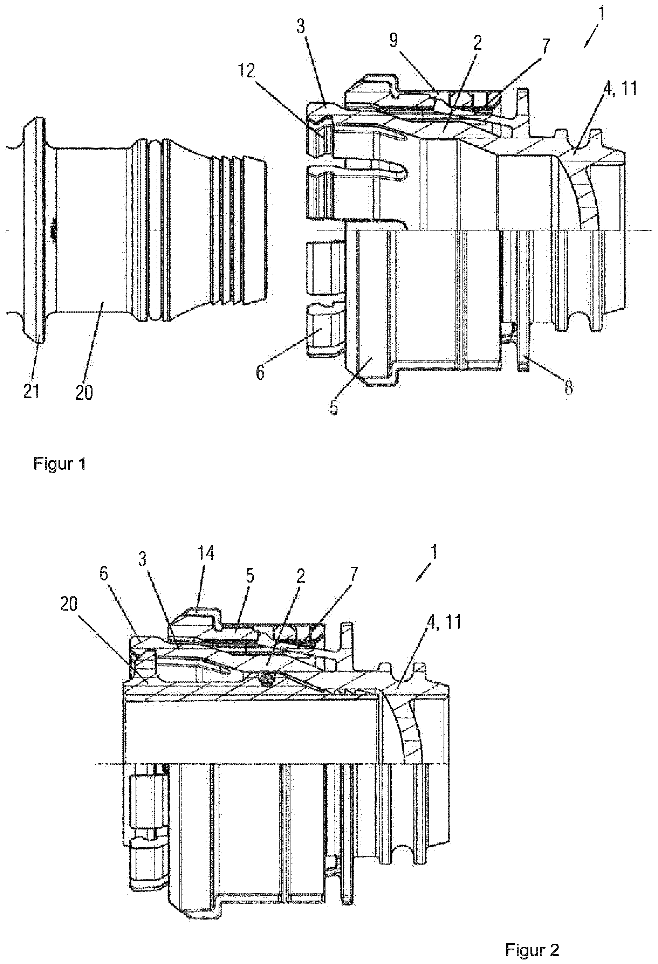

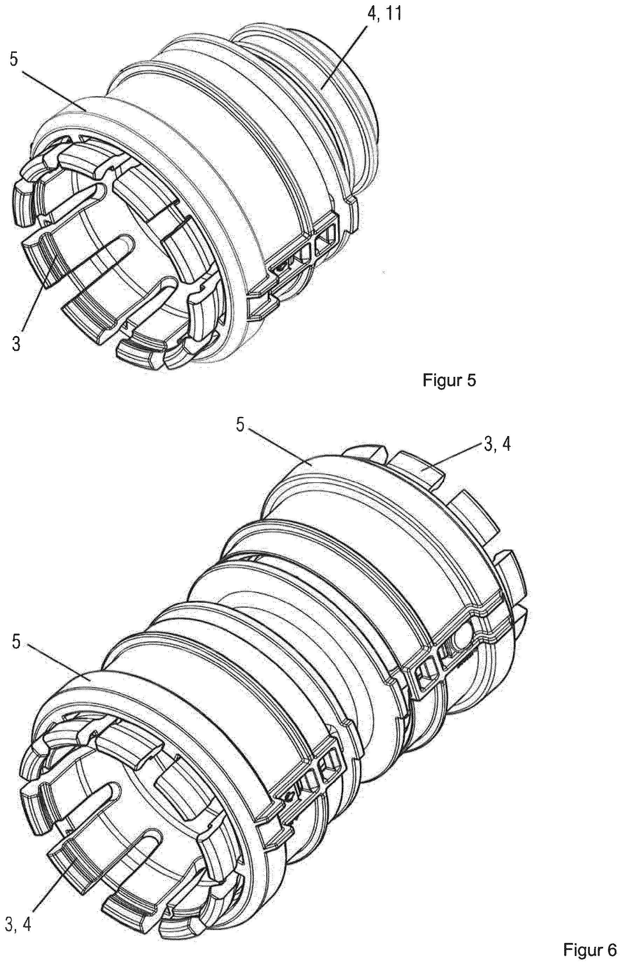

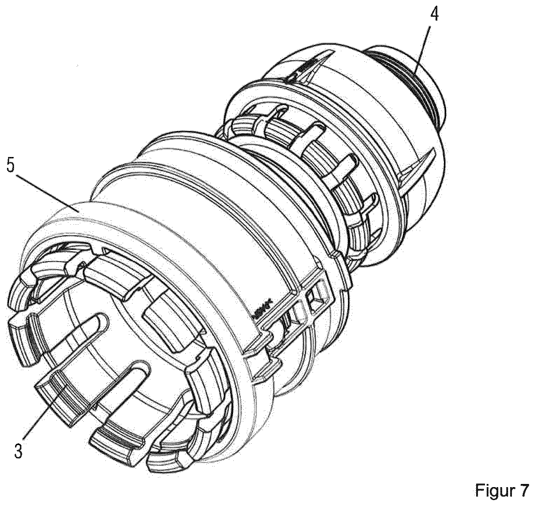

Die in Fig. 1 dargestellte Zeichnung zeigt einen erfindungsgemässen Anschlussverbinder 1 vor der Montage an einer Stützhülse 20, die vorzugsweise einer Stützhülse 20 einer Klemmverbindung für Rohre entspricht. Dadurch dass unterschiedliche Elemente miteinander kompatibel sind wird eine hohe Modularität erreicht. Um dies zu gewährleisten, weist der Anschlussverbinder 1 eine Innenhülse 2 auf, welche einen Standardbereich 3 aufweist, der mit einer Stützhülse 20 koppelbar ist. Der Standardbereich 3 der Innenhülse 2 ist immer gleich ausgebildet um den Anschlussverbinder 1 an einer Stützhülse 20 zu montieren. Der Anschlussverbinder 1 dient dem Anschliessen eines Funktionselements 4 an einer Stützhülse und nicht dem Anschliessen eines Rohres. Durch den Anschlussverbinder 1 können weitere Funktionselemente 4 angeschlossen werden, die die weitere Verbindung bzw. Aufgabe der Verbindung definieren, bspw. kann eine Abschlusskappe 11 als Funktionselement 4 an der Innenhülse 2 angeformt sein, wie aus den Fig. 1-5 erkennbar ist. Aber auch andere Funktionselemente 4 sind denkbar, wie ein weiterer Standardbereich 3, in Fig. 6 dargestellt, ermöglicht das Anschliessen einer weiteren Stützhülse 20 oder aber auch eine reduzierte Stützhülse kann das Funktionselement 4 bilden, wie in Fig. 7 dargestellt, an das dann direkt eine kleiner dimensionierte Klemmhülse angeschlossen und mit der dann ein Rohr befestigt werden kann. Die Innenhülse 2 mit dem Standardbereich 3 und dem Funktionselement 4 ist einteilig ausgebildet.

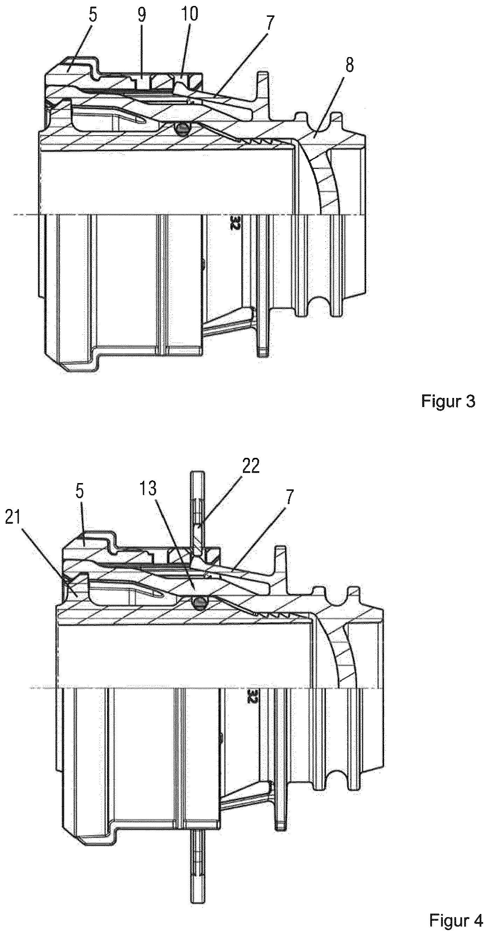

Der Anschlussverbinder 1 weist am Aussenumfang der Innenhülse 2 im Standardbereich 3 eine Schiebehülse 5 auf, wobei die Schiebehülse 5 axial verschiebbar auf der Innenhülse 2 im Standardbereich 3 angeordnet ist. In Fig. 2 ist ersichtlich, wenn eine Stützhülse 20 in den Anschlussverbinder 1 eingeschoben ist. Der Flansch 21 der Stützhülse 20 ist dann in der ringsum verlaufenden Nut 12 am Innendurchmesser der radial elastische Rastfinger 6 angeordnet, wodurch die Stützhülse 20 axial positioniert ist, wobei aber in dieser Position noch keine feste Klemmung stattfindet. Durch das Verschieben der Schiebehülse 5 an den äusseren Rand der Innenhülse 2 werden die Rastfinger 6, welche entlang des Umfangs der Innenhülse 2 im Standardbereich 3 angeordnet sind, an den Flansch 21 der Stützhülse 20 gepresst bzw. die Rastfinger 6 werden zwischen dem Flansch 21 und der Schiebehülse 5 geklemmt, wie aus Fig. 3 ersichtlich ist. Vorzugsweise sind vier bis 20 Rastfinger 6 entlang des Umfangs angeordnet, die eine gute Klemmung gewährleisten, wobei die Rastfinger 6 radial elastisch ausgebildet sind um den Klemmvorgange wie auch ein Öffnen der Verbindung wieder zu ermöglichen. Die Anschlussverbindung 1 ist als lösbare Klemmverbindung ausgebildet, wobei sie nur mit Spezialwerkzeug gelöst werden kann und sie danach auch wieder eingesetzt werden kann.

Um ein Verriegeln der Anschlussverbindung 1 zu gewährleisten wenn die Klemmung erfolgt, ist an der Innenhülse 2 ein Rasthaken 7 angeordnet, wobei vorzugsweise mindestens zwei Rasthaken 7 angeordnet sind, die sich am Umfang der Innenhülse 2 gegenüber liegen. Die Innenhülse 2 weist am Endbereich des Standardbereichs 3 der hin zum Funktionselement 4 gerichtet ist eine Abschlussscheibe 8 auf. Die Abschlussscheibe 8 bildet die Trennstelle zwischen Standardbereich 3 und Funktionselement 4 der Innenhülse 2. Der Rasthaken bzw. die Rasthaken 7 sind vorzugsweise an der Abschlussscheibe 8 angeordnet. Sie greifen in eine der Öffnungen 9, 10 die an der Schiebehülse 5 angeordnet sind. Die Öffnungen sind axial hintereinander angeordnet, wobei sich vorzugsweise an der gegenüberliegenden Stelle des Umfangs der Schiebehülse 5 ebenfalls zwei axial hintereinander angeordnete Öffnungen 9, 10 befinden. Aus Fig. 2 ist die Einrastung des Rasthakens 7 in der vorderen Öffnung 9 zu sehen, so dass die Schiebehülse 5 leicht arretiert ist aber zum festen Klemmen des Anschlussverbinders 1 auf einer Stützhülse 20 nach vorne schiebbar ist. In Fig. 3 ist dann ersichtlich, wenn der Rasthaken 7 in der hinteren Öffnung 10 eingehakt ist und die Schiebehülse 5 dann in der Klemmstellung fixiert ist. In Fig. 4 ist das Spezialwerkzeug 22 ersichtlich welches das Hinunterdrücken des Rasthakens 7 und so das Lösen des Anschlussverbinders 1 an der Stützhülse 20 ermöglicht.

Um die Dichtheit des Anschlussverbinders 1 zu gewährleisten befindet sich an der Innenhülse 2 ein Dichtbereich 13, welcher zusammen mit einer Dichtung welche vorzugsweise an der Stützhülse 20 angeordnet ist abdichtet.

Um die benötigte Steifigkeit der Schiebehülse 5 im Bereich der Klemmung der Rastfinger 6 zu erreichen, ist die Schiebehülse 5 am Umfang mit einem Stützring 14 verstärkt bzw. es liegt in diesem Bereich eine Verdickung des Materials vor.

### Bezugszeichenliste

- 1: Anschlussverbinder
- 2: Innenhülse
- 3: Standardbereich
- 4: Funktionselement
- 5: Schiebehülse
- 6: Rastfinger
- 7: Rasthaken
- 8: Abschlussscheibe
- 9: Öffnung
- 10: Öffnung
- 11: Abschlusskappe
- 12: Ringsum laufende Nut
- 13: Dichtbereich
- 14: Stützring

- 20: Stützhülse
- 21: Flansch
- 22: Spezialwerkzeug

## Patentansprüche

1. Lösbarer Anschlussverbinder (1) mit einer Stützhülse (20), vorzugsweise aus Kunststoff, wobei der Anschlussverbinder (1) dem Anschliessen eines Funktionselements (4) an die Stützhülse (20) dient, beinhaltend eine Innenhülse (2), wobei die Innenhülse (2) einen Standardbereich (3) zum Anschliessen an die Stützhülse (20) und das Funktionselement (4) zur Definition der weiteren Verwendung aufweist, wobei der Standardbereich (3) der Innenhülse (2) auf die Stützhülse (20) aufgeschoben ist, wobei die Innenhülse (2) einteilig ausgebildet ist, eine Schiebehülse (5) zur Klemmung und Öffnung der Klemmung der Innenhülse (2) an der Stützhülse (20), wobei die Schiebehülse (5) am Aussenumfang der Innenhülse (2) im Standardbereich (3) angeordnet ist, wobei die Schiebehülse (5) axial verschiebbar zur Klemmung und Öffnung der Innenhülse (2) auf der Stützhülse (20) angeordnet ist, wobei Rastfinger (6) im Standardbereich (3) entlang des Umfangs an der vom Funktionselement (4) abgewandten Stirnseite angeordnet sind, wobei das Funktionselement (4) als Abdeckkappe, Stützhülse, wobei die Stützhülse identisch ist zur bereits vom Anschlussverbinder beinhaltenden Stützhülse, reduzierte Stützhülse, wobei die reduzierte Stützhülse eine identische Formgebung der bereits vom Anschlussverbinder beinhaltenden Stützhülse ist, jedoch kleiner, oder Standardbereich zum Anschliessen an eine Stützhülse, wobei der Standardbereich identisch mit dem bereits vom Anschlussverbinder beinhaltende Standardbereich ausgeführt ist, ausgebildet ist.

2. Anschlussverbinder (1) nach Anspruch 1, **dadurch gekennzeichnet, dass** der Standardbereich (3) und das Funktionselement (4) axial aneinander anschliessen.

3. Anschlussverbinder (1) nach einem der Ansprüche 2 oder 3, **dadurch gekennzeichnet, dass** die Rastfinger (6) elastisch ausgebildet sind, um das Aufschieben auf eine Stützhülse (20) und das Festklemmen zu ermöglichen.

4. Anschlussverbinder (1) nach Anspruch 1, **dadurch gekennzeichnet, dass** die Innenhülse (2) mindestens einen Rasthaken (7) aufweist.

5. Anschlussverbinder (1) nach Anspruch 1 oder 5, **dadurch gekennzeichnet, dass** zwei Rasthaken (7) im Standardbereich (3) der Innenhülse (2) angeordnet sind, vorzugsweise sich gegenüberliegend.

6. Anschlussverbinder (1) nach einem der vorangehenden Ansprüche, **dadurch gekennzeichnet, dass** die Innenhülse (2) am Ende des Standardbereichs (3), der dem Funktionselement (4) zugewandten Seite, eine Abschlussscheibe (8) aufweist.

7. Anschlussverbinder (1) nach einem der vorangehenden Ansprüche, **dadurch gekennzeichnet, dass** die Schiebehülse (5) zwei axial nebeneinander angeordnete Öffnungen (9, 10) aufweist, die dem Einrasten des Rasthakens (7) und damit zur axialen Fixierung bzw. Positionierung der Schiebehülse (5) dienen.

8. Anschlussverbinder (1) nach einem der vorangehenden Ansprüche, **dadurch gekennzeichnet, dass** die Rastfinger (6) eine am Innenumfang ringsum verlaufende Nut (12) aufweisen.

## Claims

1. Releasable connector (1) having a supporting sleeve (20), preferably made from plastic, the connector (1) serving to connect a functional element (4) to the supporting sleeve (20), comprising an inner sleeve (2), the inner sleeve (2) having a standard region (3) for connecting to the supporting sleeve (20) and the functional element (4) for defining the further use, the standard region (3) of the inner sleeve (2) being pushed onto the supporting sleeve (20), the inner sleeve (2) being configured in one piece, a sliding sleeve (5) for clamping and opening the clamping of the inner sleeve (2) on the supporting sleeve (20), the sliding sleeve (5) being arranged on the outer circumference of the inner sleeve (2) in the standard region (3), the sliding sleeve (5) being arranged in an axially displaceable manner for clamping and opening the inner sleeve (2) on the supporting sleeve (20), latching fingers (6) being arranged in the standard region (3) along the circumference on the end side which faces away from the functional element (4), the functional element (4) being configured as a covering cap, supporting sleeve, the supporting sleeve being identical to the supporting sleeve already comprised by the connector, reduced supporting sleeve, the reduced supporting sleeve being of an identical design to the supporting sleeve already comprised by the connector, but smaller, or standard region for connecting to a supporting sleeve, the standard region being designed identically to the standard region already comprised by the connector.

2. Connector (1) according to Claim 1, **characterized in that** the standard region (3) and the functional element (4) adjoin one another axially.

3. Connector (1) according to either of Claims 2 and 3, **characterized in that** the latching fingers (6) are of elastic configuration, in order to make it possible to push them onto a supporting sleeve (20) and to clamp them fixedly.

4. Connector (1) according to Claim 1, **characterized in that** the inner sleeve (2) has at least one latching hook (7).

5. Connector (1) according to Claim 1 or 5, **characterized in that** two latching hooks (7) are arranged in the standard region (3) of the inner sleeve (2), preferably so as to lie opposite one another.

6. Connector (1) according to one of the preceding claims, **characterized in that** the inner sleeve (2) has a closing disc (8) at the end of the standard region (3), of the side facing the functional element (4).

7. Connector (1) according to one of the preceding claims, **characterized in that** the sliding sleeve (5) has two openings (9, 10) which are arranged axially next to one another and serve to latch the latching hook (7) and therefore to axially fix or position the sliding sleeve (5).

8. Connector (1) according to one of the preceding claims, **characterized in that** the latching fingers (6) have a circumferentially running groove (12) on the inner circumference.

## Revendications

1. Raccord amovible (1) pourvu d'un manchon de support (20), de préférence en matière plastique, dans lequel le raccord (1) sert au raccordement d'un élément fonctionnel (4) au manchon de support (20), contenant un manchon intérieur (2), le manchon intérieur (2) présentant une zone standard (3) pour le raccordement au manchon de support (20) et à l'élément fonctionnel (4) afin de définir l'utilisation ultérieure, la zone standard (3) du manchon intérieur (2) étant emmanchée sur le manchon de support (20), le manchon intérieur (2) étant réalisé d'un seul tenant, un manchon coulissant (5) pour le serrage et l'ouverture du serrage du manchon intérieur (2) sur le manchon de support (20),
dans lequel le manchon coulissant (5) est disposé sur la circonférence extérieure du manchon intérieur (2) dans la zone standard (3), le manchon coulissant (5) étant disposé de façon axialement coulissant sur le manchon de support (20) pour le serrage et l'ouverture du manchon intérieur (2), des doigts d'enclenchement (6) étant disposés dans la zone standard (3) le long de la circonférence sur la face frontale détournée de l'élément fonctionnel (4), l'élément fonctionnel (4) étant configuré comme un capuchon, comme un manchon de support, le manchon de support étant identique au manchon de support déjà contenu dans le raccord, comme un manchon de support réduit, le manchon de support réduit ayant une forme identique à celle du manchon de support déjà contenu dans le raccord, mais en plus petit, ou comme une zone standard pour le raccordement à un manchon de support, la zone standard étant réalisée de manière identique à la zone standard déjà contenue par le raccord.

2. Raccord (1) selon la revendication 1, **caractérisé en ce que** la zone standard (3) et l'élément fonctionnel (4) sont axialement adjacents l'un à l'autre.

3. Raccord (1) selon l'une quelconque des revendications 2 ou 3, **caractérisé en ce que** les doigts d'enclenchement (6) sont réalisés de manière élastique pour permettre l'emmanchement sur un manchon de support (20) et le blocage.

4. Raccord (1) selon la revendication 1, **caractérisé en ce que** le manchon intérieur (2) présente au moins un crochet d'enclenchement (7).

5. Raccord (1) selon la revendication 1 ou 5, **caractérisé en ce que** deux crochets d'enclenchement (7) sont disposés dans la zone standard (3) du manchon intérieur (2), de préférence en se faisant face.

6. Raccord (1) selon l'une quelconque des revendications précédentes, **caractérisé en ce que** le manchon intérieur (2) présente un disque de terminaison (8) à l'extrémité de la zone standard (3) de la face tournée vers l'élément fonctionnel (4).

7. Raccord (1) selon l'une quelconque des revendications précédentes, **caractérisé en ce que** le manchon coulissant (5) présente deux ouvertures (9, 10) disposées axialement l'une à côté de l'autre, qui servent à l'enclenchement du crochet d'enclenchement (7) et donc à la fixation axiale ou au positionnement axial du manchon coulissant (5).

8. Raccord (1) selon l'une quelconque des revendications précédentes, **caractérisé en ce que** les doigts d'enclenchement (6) présentent une rainure périphérique (12) sur la circonférence intérieure.
